# EUROPEAN PATENT APPLICATION

(11) **EP 1 479 884 A2**
(43) Date of publication of application: **24.11.2004**
(21) Application number: 04076356.7
(22) Date of filing: 05.05.2004
(51) Int. Cl.: F01N 3/031, F01N 3/20

(54) **An exhaust system and process for operating the same**

(30) Priority: 23.05.2003 US 444576
(71) Applicant: Delphi Technologies, Inc., Troy, MI 48007 (US)
(72) Inventor: Fujita, Mahoro M., Fairport, NY 14450 (US); Spadafora, Peter John, 3350 Leudelange (LU)
(74) Representative: Denton, Michael John

(57) **Abstract**

A process for operating an exhaust gas system (10, 100) comprises: producing an exhaust gas flow, introducing the exhaust gas flow to a system (10, 100) comprising a restricting device in fluid communication with an exhaust emission control device (18, 118, 230), and an exhaust conduit (14, 44, 114) comprising an exhaust throttle device (18, 118, 230), restricting the flow of the exhaust gas stream to the restricting device, and discharging the exhaust gas stream from the restricting device into the exhaust emission control device (18, 118, 230). The flow is sufficiently restricted such that the exhaust gas stream discharged into the exhaust emission control device has a temperature perform a desired function selected from the group consisting of regeneration and light-off.

## Description

### BACKGROUND OF THE INVENTION

The use of diesel particulate filters is well known in the art. Diesel particulate filters provide a diesel engine with exhaust particulate traps or filters that are operative to filter out and collect particulates from the discharged exhaust gas stream. A problem with diesel particulate filters is that they gradually become clogged with particulate matter contained within the exhaust gas stream, which can cause excessive backpressure, resulting in poor engine performance or damage to the engine or the filter.

Under heavy loads, a diesel engine emits an exhaust gas stream at a high enough temperature to bum out the particulate matter collected by the diesel particulate filter. However, when an engine is operated for protracted periods of time at, or close to its idling speed, the temperature of the exhaust gas stream as it passes through the diesel particulate filter is generally below the combustion temperature of the collected particulate matter. As a result, the particulate matter collected by the filter may be so heavy as to impede engine operation. Regeneration of the diesel particulate filter is frequently practiced in the industry to remove the particulate matter build-up. Replacement of the diesel particulate filter is not a viable solution because of the frequency and costs involved with the replacement.

Regeneration of diesel particulate filters has previously been accomplished by the use of auxiliary devices such as a burner or other heating element. For example, an air-fuel nozzle and an ignition device can be used and operated, when desired, to heat the exhaust gases and the diesel particulate filter to the combustion temperature of the collected particulate matter. In this manner, the collected particulate matter is burned from the filter surfaces to permit normal flow of the exhaust gases. Alternatively, an electric heater may be used to generate the heat to initiate the combustion of the trapped particulates.

### SUMMARY OF THE INVENTION

Disclosed herein are an exhaust system and process for operating the same. One embodiment of the exhaust system comprises: a restricting device disposed in an exhaust conduit and in fluid communication with a exhaust emission control device, and a second emission control device disposed in fluid communication with the exhaust conduit and downstream from the exhaust throttle device.

One embodiment of the process for operating an exhaust gas system comprises: producing an exhaust gas flow, introducing the exhaust gas flow to a system comprising a restricting device in fluid communication with an exhaust emission control device, and an exhaust conduit comprising an exhaust throttle device, restricting the flow of the exhaust gas stream to the restricting device, and discharging the exhaust gas stream from the restricting device into the exhaust emission control device. The flow is sufficiently restricted such that the exhaust gas stream discharged into the exhaust emission control device has a temperature perform a desired function selected from the group consisting of regeneration and light-off.

In another embodiment, the exhaust system comprises: an exhaust conduit in fluid communication an outlet of an engine and with a exhaust emission control device, a means for restricting flow in the exhaust conduit under selected conditions, and a means for controlling the means for restricting flow.

The above described and other features are exemplified by the following figures and detailed description.

### BRIEF DESCRIPTION OF THE DRAWINGS

Referring now to the figures wherein the like elements are numbered alike:
Figure 1 is a partial cutaway, schematic view of particulate filter regeneration system;
Figure 2 is a cross sectional view of an exhaust throttle valve in the closed position taken along lines A-A of Figure 1;
Figure 3 is a cross sectional view of the exhaust valve in the opened position taken along lines B-B of Figure 1;
Figure 4 is a cross-sectional view of an alternative exhaust conduit with a restricting device wherein a control conduit is supported at any desired location within the exhaust conduit with supports;
Figure 5 is cross-sectional view of yet another alternative exhaust conduits with a restricting device wherein a divider is used to form the control conduit as a portion of the exhaust conduit instead of employing a separate conduit;
Figure 6 is a cross sectional view of an exhaust conduit of Figure 1;
Figure 7 is a partial cutaway, schematic view of another exhaust emission control device restricting system;
Figure 8 is a cross sectional view of an exhaust throttle valve device in the closed position for the restricting system of Figure 7;
Figure 9 is a cross sectional view of an exhaust throttle valve device in the opened position for an restricting system of Figure 7; and
Figure 10 is a cross sectional view of another embodiment of an exhaust throttle valve device employing two separate exhaust conduits.

### DESCRIPTION OF THE PREFERRED EMBODIMENT

Employing a restricting device and a method of operating an exhaust system enables enhancements such as reduced light-off time, regeneration (e.g., removal of soot, contaminants, poisons, and the like) from exhaust emission control devices without the use of an auxiliary heater. The exhaust emission control devices may comprise catalytic converters, scrubbing devices (e.g., hydrocarbon, sulfur, and the like), particulate filters/traps, adsorbers, absorbers, and the like, as well as combinations comprising at least one of the foregoing devices. The restricting device can be employed to increase the temperature in an area of the exhaust emission control device to cause light-off and/or regeneration. It is noted that, although the process and system are described in relation to a particulate filter(s), the concept applies generally to emission control devices in any exhaust stream (e.g., diesel, gasoline, and the like).

For example, there is an issue relating to the sooting of a particulate filter during particular operating conditions. At idling (or low load (e.g., less than about 20% of the max power for that engine), the intake throttle of an engine can be used to increase the exhaust temperature. This increases the engine out exhaust temperature, but does not effectively increase the exhaust temperature at the particulate filter because, as a result of the throttling, the exhaust gas travel speed decreases at the same exhaust pipe diameter. In other words, the residence time in the pipe increases, and the exhaust gas temperature decreases while traveling to the particulate filter. Since the thermal loss (temperature decrease between engine out and the exhaust emission control device in) is caused during the travel therebetween, this thermal loss is address by either minimizing the travel time from the engine out to the exhaust emission control device inlet and/or by insulating the exhaust pipe to prevent the heat radiation. The travel time can be minimized with a restriction plate, pipe, or the like, inducting all of the exhaust gas flow into the small diameter inner pipe. This smaller pipe (or section of the exhaust pipe) increases the travel speed of the exhaust gas and thereby minimizes the travel time. Additionally, with the restriction plate inducting all exhaust gas flow into the small diameter inner pipe, the outer pipe (exhaust pipe) and any gas surrounding the inner pipe, work as an insulator.

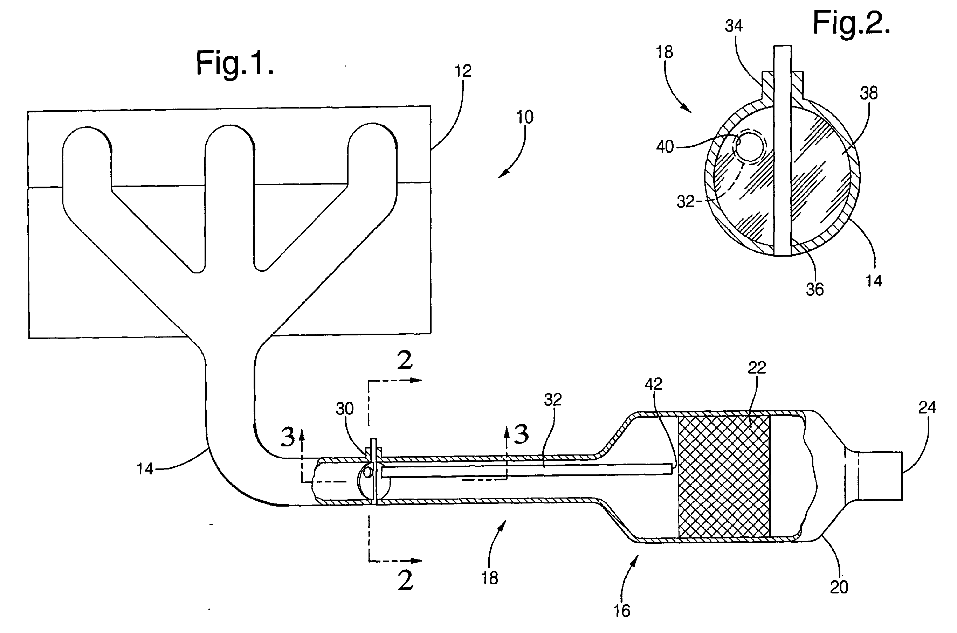

Referring now to the drawings and in particular to Figure 1, there is shown an exemplary exhaust emission control device, i.e., a diesel particulate filter, regeneration system generally designated 10. The regeneration system 10 includes a source of exhaust stream such as from a engine 12 and an exhaust conduit 14 in fluid communication with the engine 12. The exhaust conduit 14 is further in fluid communication with a particulate filter 16 and comprises an exhaust valve device 18 disposed upstream from the particulate filter 16. The valve device 18 shown is a throttle valve, although other valve and flow restrictors can be employed, such as iris valves, butterfly valves, slider valves, and the like.

The particulate filter 16 includes a housing 20 that contains one or more filter elements 22. The housing 20 is disposed in fluid communication with the exhaust conduit 14 such that a flow of the exhaust stream from the engine to the particulate filter 16 may occur. The housing 20 further includes an outlet 24 for discharging the filter exhaust gas stream from the particulate filter 16 to a catalytic converter, to another particulate filter, to a non-thermal plasma reactor, to the atmosphere, or to a combination of devices comprising at least one of the foregoing.

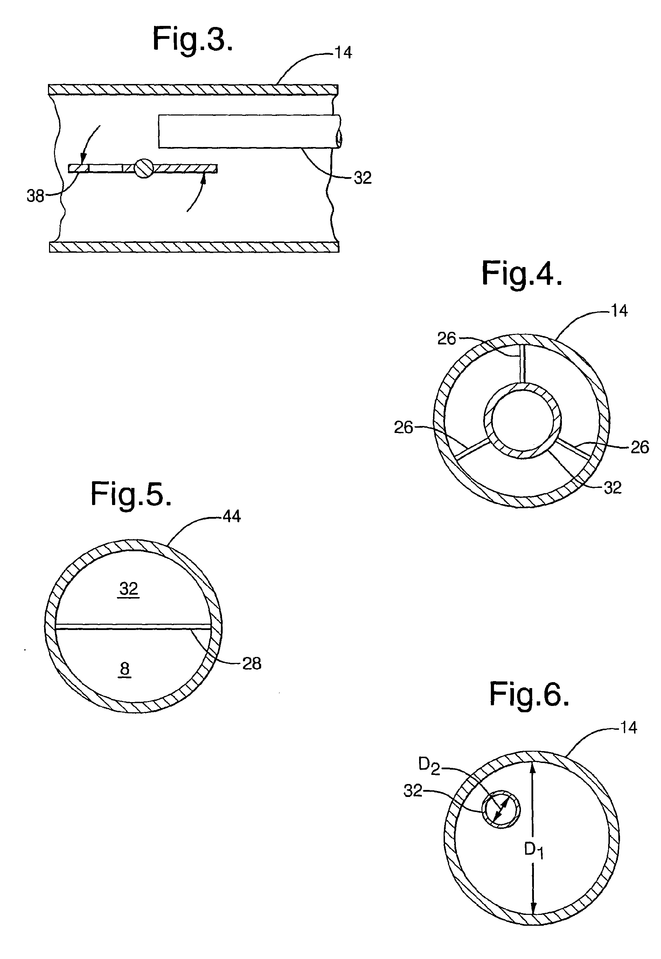

The exhaust throttle valve device 18 generally includes a shutter portion 30 and a control conduit 32. As shown more clearly in Figures 2 and 3, the exhaust throttle valve device 18 further comprises an actuator 34, a support member 36 and one or more shutter blades 38 extending from the support member 36. The actuator 34 provides a triggering signal for opening and closing the shutter blades. Figure 2 illustrates the shutter blades 38 in a closed position, wherein the shutter blades 38 cooperatively communicate to restrict or substantially restrict fluid communication from the engine 12 to an inlet 40 of the control conduit 32.

Figure 3 illustrates the shutter portion 30 in an open position, wherein the shutter blades 38 cooperatively communicate to permit fluid communication from the engine 12 through a cross-sectional area provided by the control conduit 32 as well as the main exhaust conduit 14.

For triggering the opening and closing of the shutter blades 38, the actuator 34 can comprise an electrical circuit (not shown) for receiving and transmitting a triggering signal to cause the blades 38 to open and close. Alternatively, the actuator 34 can comprise a vacuum mechanism for opening and closing the blades 38, wherein the vacuum mechanism sends a triggering signal in response to a vacuum change resulting from a change in exhaust gas stream flow rate from the engine 12 into the exhaust conduit 14. The regeneration caused by the restriction of the exhaust stream flow to the control conduit 32 can be initiated based upon several factors (e.g., triggering signal(s)) or combination of factors, e.g., exhaust stream flow rate, pressure differential across the particulate filter, exhaust temperature, time based, engine idle speed, and the like.

The control conduit 32 is disposed within the exhaust conduit 14 and extends along a length of the conduit 14. The control conduit 32 is supported by the shutter portion 30 at one end or is secured to an interior wall of the exhaust conduit 14. The control conduit 32 is positioned such that the inlet 40 extends at or beyond a plane maintained by the shutter blades 38 in a closed position. In this manner, the shutter blades 38 can sealingly close or form a barrier about an outer perimeter of the control conduit 32. An outlet 42 of the control conduit 32 is positioned at or near the filter element 22 of the particulate filter 16. The control conduit 32 may further be connected along its length to the interior wall of the exhaust conduit 14 by means of a support (or plurality of supports 26 (see Figure 4)) such as a hanger, weld, bar, divider, or the like. Optionally, the control conduit and exhaust conduit can have various designs and can be produced in various fashions. Referring to Figure 5, the exhaust conduit 44 can be the main exhaust conduit, with the control conduit 32 formed by a divider 28 and comprising a portion of the exhaust conduit 44 (e.g., half, a third, a quarter, or any other desired portion of the conduit), with the remainder of the conduit 8 capable of being closed, for example with a shutter portion (not shown). In this embodiment, the control conduit 32 can enhance the flow of the exhaust gas, but since only a single conduit is employed (namely exhaust conduit 44 which is divided into sections 32 and 8), the insulating effect obtained by having control conduit 32 as a separate conduit disposed within the exhaust conduit 14 (see Figures 1-4 and 6), is not realized.

As shown in Figure 6, an inner diameter D2 of the control conduit 32 is smaller than the inner diameter D1 of the exhaust conduit 14. The size of inner diameter D2 is selected to provide a reduced residence time for the exhaust gas stream when the shutter blades 38 are in the closed position compared to the residence time experienced when the shutter blades are in the open position under the same idle or load conditions. Inner diameter D2 is preferably less than or equal to about 50% of D1, with less than or equal to about 40% of D1 more preferred, with less than or equal to about 30% of D1 even more preferred, with less than or equal to about 20% most preferred. The lower limit of D1 is based upon the desired gas flow rate and quantity of gas.

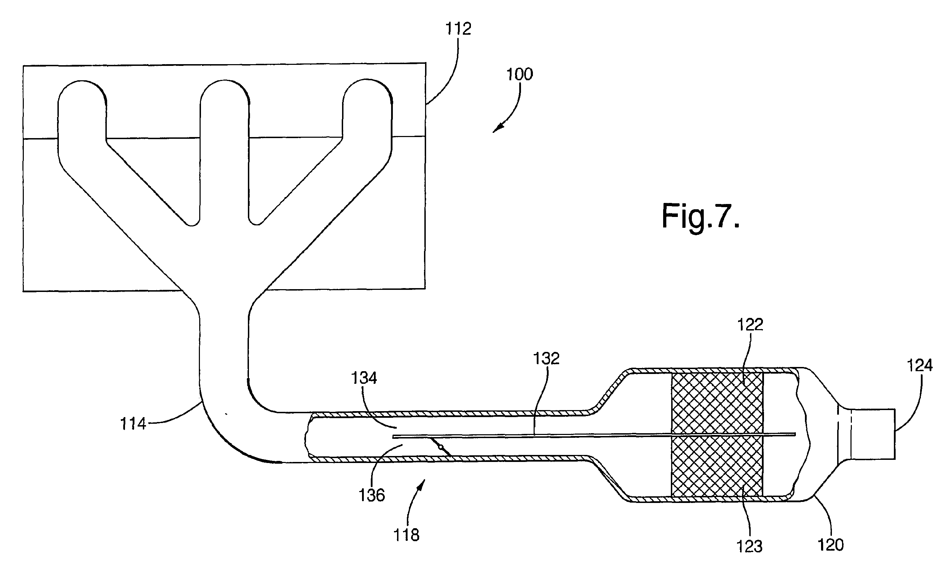

Another embodiment of a particulate filter regeneration system is shown in Figure 7. The system, generally designated 100, includes an exhaust throttle valve device 118. The exhaust throttle device 118 generally comprises a pivotable shutter 130 and a partition 132.

The partition 132 extends along a portion of a length of the exhaust conduit 14 and the particulate filter 16 to form two fluid conduits 134, 136. Preferably, the partition extends through the particulate filter 16. As will be discussed in further detail below, the pivotable shutter 130 is disposed in a selected one of the conduits. The other conduit, without the pivotable shutter, will be referred to as a control conduit for this system 100. The partition 132 may take the form of any shape in defining the fluid conduits 134, 136. Preferably, partition 132 is generally planar and substantially parallel to the exhaust conduit 14. The partition 132 is secured to the interior of the exhaust conduit 14 by a weld or the like. The cross sectional area of control conduit 134 is preferably less than or equal to about 50% of the other fluid passageway 136, with less than or equal to about 40% more preferred, with less than or equal to about 30% even more preferred, with less than or equal to about 20% most preferred. Again, the lower limit is based upon the desired gas flow rate and quantity of gas.

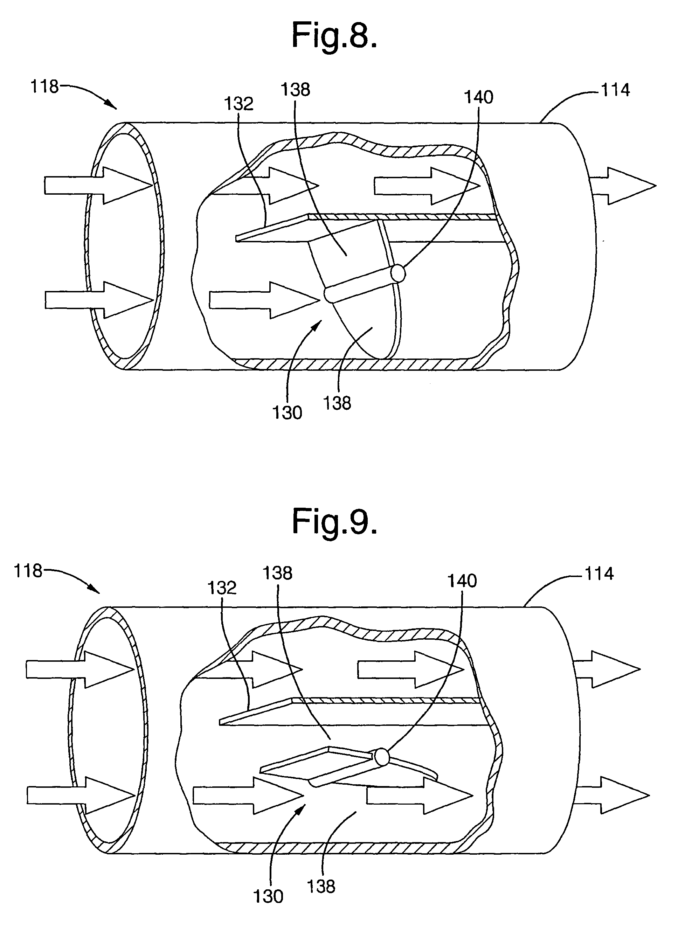

As shown more clearly in Figures 8 and 9, the pivotable shutter 130 is disposed in a selected one of the fluid conduits 134, 136. Preferably, the pivotable shutter 130 is disposed in the conduit with the greatest cross-sectional flow area. The pivotable shutter 130 includes at least one blade 138 extending from a pivot point 140. The blade 138 is preferably planar and has a shape that, in the closed position, generally conforms to the cross-sectional shape of the fluid conduit in which it is disposed. The pivot point 140 is centrally located between two blades 138 extending coaxially from the pivot point 140. Alternatively, the pivot point 140 may be located off-center with blades 138 of unequal lengths extending coaxially therefrom, or the pivot point 140 may be located on a interior surface of the exhaust conduit 114 or on a surface of the partition 132 such that one blade 138 extends therefrom, or the like. An actuator (not shown) is in operable communication with the pivotable shutter 130 for providing a trigger signal to pivot the blade 138 about pivot point 140. In this manner, the blade 138 may be pivoted to an open or closed position. Figure 8 illustrates the exhaust throttle valve device 118 with blades 138 in a closed position. Figure 9 illustrates the exhaust throttle valve device 118 with the blades 138 in an open position.

Within the particulate filter 16, at least one filter element 122 is disposed in fluid communication with fluid conduit 134 whereas at least one filter element 123 is disposed in fluid communication with fluid conduit 136, wherein filters 122 and 123 may comprise the same filter. The filter elements 122, 123 generally conform to the cross-sectional shape defined by the respective fluid conduit 134, 136 in which they are positioned.

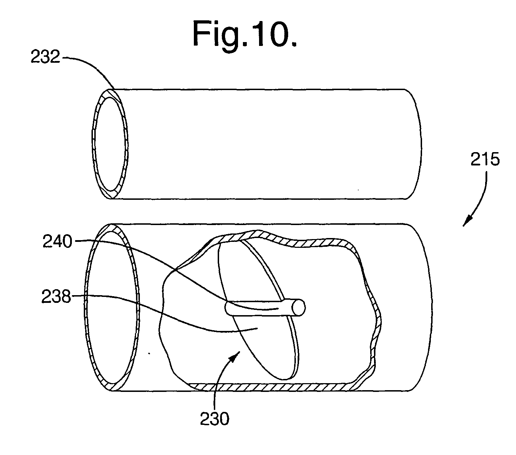

Referring to Figure 10, a section of an exhaust conduit is illustrated comprising separate exhaust gas conduits. The exhaust throttle valve device 230, having a pivot point 240 and blades 238 is disposed in the second conduit 215. The second conduits 215, and the control conduit 232 can be disposed in fluid communication with a single particulate filter or with multiple filters (not shown). These filters can be in fluid communication with one another or can solely be in fluid communication with the respective conduit 232 or 215. In other words, one particulate filter can be in fluid communication with control conduit 232, while a second filter can be in fluid communication with a different particulate filter. In this embodiment, under low load conditions, the exhaust gas would be directed through the control conduit 232 to the associated particulate filter. In this operation mode, the second conduit 232, as well as the second particulate filter, would not be in fluid communication with the exhaust gas, and the exhaust throttle valve device 230 would be in the closed position.

The design and materials for the exhaust conduit 14, the particulate filter housing 20 should be compatible with the environment in which they will be employed. The exhaust conduit 14, the particulate filter housing 20, the control conduit 32 and the partition 132 are preferably constructed from materials that are substantially inert to the operating environment and to the exhaust gas stream. Suitable materials include ferrous materials, e.g., steel, stainless steel, and the like. Meanwhile, the gauge or thickness of the exhaust conduit 14, particulate filter housing 20, control conduit 32 or partition 132 should be sufficient to provide adequate support and stability to the conduit during operation of the engine 12.

Although the cross-sectional shape may vary, the exhaust conduit 14, preferably has a substantially circular cross-sectional shape. The exhaust conduit 14 may further include brackets, hangers, or the like, for attachment of the exhaust conduit 14to a vehicle or the like.

The filter elements 22, 122, 123 contained within the particulate filter housing 20 may be made of any material suitable for trapping and holding particulate material carried by the exhaust stream. Preferably, the filter elements 22, 122, 123 are fabricated from materials that are capable of withstanding the elevated temperatures reached during the heavy load operation of the engine 12 as well as during particulate filter regeneration. Preferably, the filter elements 22, 122, 123 are fabricated from materials that withstand temperatures less than or equal to 600°C. Materials suitable for use as the filter element 22, 122, 123, include ceramics, metals, and the like, as well as oxides, cermets, alloys, and combinations comprising at least one of the foregoing materials. These filter materials can be in the form of beads, monolithic structures, wire mesh or multiple screen elements (coated and uncoated), and the like, as well as combinations comprising at least one of the foregoing forms. Suitable metal materials include steel, stainless steel, and the like. Suitable ceramic materials include, alumina, and the like. For example, the filter can comprise ceramic coated metal wire mesh, a monolithic ceramic structure, ceramic beads, and combinations comprising at least one of the foregoing.

In operation, the engine 12 is generally operated under two different conditions, an idle condition such as when the motor vehicle is stopped or at a low load and a load condition such as when the motor vehicle is accelerating (e.g., at load of greater than or equal to about 20% of maximum load for that engine). The particulate regeneration systems 10, 100 maintain the exhaust gas stream entering the particulate filter 16 at a temperature sufficient to effect regeneration of the respective filter elements 22, 122, 123 under these different operating conditions, while low enough to prevent degradation of the filter. That is, the temperature of the exhaust gas stream entering the filter elements 22, 122, 123, is at a temperature effective to combust particulate matter collected thereby.

To effect regeneration of the filter elements 22, 122, 123, the temperature of the exhaust gas stream as it enters the particulate filter 16 is preferably maintained at a temperature greater than or equal to about 350°C, with a temperature of greater than or equal to about 375°C more preferred. In order to prevent system degradation caused by excessive heat, it is also preferred that the temperature of the exhaust gas stream entering the particulate filter 16 be maintained at a temperature less than or equal to about 550°C, and with less than or equal to about 500°C more preferred.

Operating particulate regeneration systems 10, 100 can include programming the exhaust throttle valve devices 18, 118 to open and close the respective shutter blades 38, 138 based upon the operating condition (e.g., idle or load; or a particular level of idle or load), exhaust temperature, pressure differential across the particulate filter, or may be time-based. For example, the actuator 34 can be programmed to provide a triggering signal under predetermined idle conditions to move the blades 38, 138 to a closed position (or partially closed position) in the exhaust conduit 14. As a result, the flow of the exhaust gas stream is restricted substantially to the control conduit 32, 134. Since the cross-sectional area of the control conduit 32, 134 is smaller than the cross sectional area of the exhaust conduit 14, the flow rate of the exhaust gas stream through the control conduit 32, 134 increases significantly. The increase in flow rate reduces the residence time of the exhaust gas stream within control conduit 32, 134, (i.e., reducing travel time from the engine outlet to the particulate filter inlet), and thereby minimizing thermal loss. Since thermal loss is minimized, the exhaust gas stream can be maintained at a temperature effective to regenerate the filter elements contained in the particulate filter 16 under idle conditions.

In system 10, the exhaust conduit 14 further functions as an insulator to control conduit 32. The exhaust conduit 14 provides a barrier to the control conduit 32 from direct contact with the external environment. Moreover, since the exhaust gas stream flowing through the exhaust conduit 14 prior to restricting the flow is at an elevated temperature, the conduit 14 functions as an insulator, further minimizing thermal losses in the exhaust gas stream.

When the blades 38, 138, 238 are in the closed position, e.g., at a predetermined idle condition, the exhaust gas stream discharged from the control conduit 32, 134, 232 into the particulate filter 16 is at a temperature effective to combust the particulate matter collected by the respective filter element 22, 122. In the case of filter element 122 of system 100, since the thermal capacity of the filter element 122 is relatively small due to its relatively small size compared to the total cross sectional area of the exhaust conduit 14, regeneration of substantially the entire surface area of the filter element 122 may occur.

Under predetermined partial or full load conditions, the actuator can be programmed to pivotably move the shutter blades 38, 138 to an open position (as shown in Figures 3, 9, respectively) or to a partially open position. In the open position, the flow of the exhaust gas stream is unrestricted and flows through all of the fluid passageways, e.g., 14, 32, 134, 136. Under these types of load conditions, the temperature of the exhaust gas stream is effective to cause combustion of the particulate matter collected by filter elements 22, 122, 123. Optionally, the blades 38 can be partially closed to restrict the flow to the control conduit and to maintain the exhaust gas at a desired exhaust gas temperature (i.e., reduce the thermal losses of the exhaust gas stream as it flow from the engine outlet to the filter inlet).

Employing the restricting device (e.g., an exhaust throttle device) in the exhaust system comprising an exhaust emission control device, the system can regenerate and/or light-off the exhaust emission control device under different operating conditions, e.g., idle or load conditions. For example, even at idle, light off of a catalyst in a catalytic converter can occur in reduced time, thereby reducing emissions. Also, clogging of a particulate filter, sulfur trap, or the like, can be prevented during operation, thereby preventing buildup of backpressure to an engine and other problems caused by clogging of the exhaust emission control device. Similarly, poisoning of a catalyst in a catalytic converter is prevented due to the regeneration. The system is relatively simple, inexpensive to install and provides a reliable process for regenerating and/or attaining light-off of an exhaust emission control device. Moreover, the system does not require the use of an auxiliary heater.

This system further enables control of the exhaust gas temperature. By restricting flow in the exhaust conduit, the residence time of gas passing through the conduit can be reduced, thereby reducing the temperature drop of the gas as it passes through the exhaust conduit. Since the means for restricting the flow (e.g., the restricting device) is controllable based upon various sensed conditions and/or based upon a timing scheme, regeneration, light-off, and the like can be attained as desired. Controlling of the restricting device can be with various mechanical, electrical and/or software devices, including sensors, computers, software, and the like.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A process for operating an exhaust gas system (10, 100), comprising:
producing an exhaust gas flow;
introducing the exhaust gas flow to a system (10, 100) comprising a restricting device in fluid communication with an exhaust emission control device (18, 118, 230), and an exhaust conduit (14, 44, 114) comprising an exhaust throttle device (18, 118, 230);
restricting the flow of the exhaust gas stream to the restricting device (18, 118, 230); and
discharging the exhaust gas stream from the restricting device into the exhaust emission control device (18, 118, 230);
wherein the flow is sufficiently restricted such that the exhaust gas stream discharged into the exhaust emission control device (18, 118, 230) has a temperature perform a desired function selected from the group consisting of regeneration and light-off.

2. The process for operating an exhaust gas system (10, 100) according to Claim 1, wherein the flow is restricted when an engine (12) producing the exhaust gas stream is operating at idle.

3. The process for operating an exhaust gas system (10, 100) according to Claim 1, wherein the flow is restricted based upon a vacuum level produced from the flow of the exhaust gas stream through the exhaust conduit (14, 44, 114).

4. The process for operating an exhaust gas system (10, 100) according to Claim 1, further comprising unrestricting the flow of the exhaust gas stream through the exhaust conduit (14, 44, 114) when an engine (12) producing the exhaust gas stream is operating under a load.

5. The process for operating an exhaust gas system (10, 100) according to Claim 4, further comprising producing the exhaust gas stream, and wherein the load is greater than or equal to about 20% of a maximum load for the engine (12).

6. The process for operating an exhaust gas system (10, 100) according to Claim 1, further comprising restricting the flow at timed intervals.

7. The process for operating an exhaust gas system (10, 100) according to Claim 1, further comprising producing the exhaust gas stream, sensing an operating load of the engine (12), and restricting the flow based upon the operating load.

8. The process for operating an exhaust gas system (10, 100) according to Claim 1, further comprising sensing an exhaust stream temperature at an inlet (40) of the exhaust emission control device (18, 118, 230) and restricting the flow based upon the exhaust stream temperature.

9. The process for operating an exhaust gas system (10, 100) according to Claim 1, wherein the restricting device and the exhaust gas conduit are separate conduits.

10. The process for operating an exhaust gas system (10, 100) according to Claim 1, wherein the exhaust gas conduit is in fluid communication with a second emission control device (18, 118, 230) and the restricting device is only in fluid communication with the exhaust emission control device (18, 118, 230).

11. The process for operating an exhaust gas system (10, 100) according to Claim 1, wherein the exhaust emission control device (18, 118, 230) is selected from the group consisting of catalytic converters, scrubbing devices, particulate filters/traps (16), adsorbers, and absorbers.

12. An exhaust system (10, 100), comprising:
a restricting device disposed in an exhaust conduit (14, 44, 114) and in fluid communication with a exhaust emission control device (18, 118, 230); and
a second emission control device (18, 118, 230) disposed in fluid communication with the exhaust conduit (14, 44, 114) and downstream from the exhaust throttle device (18, 118, 230).

13. The system (10, 100) according to Claim 12, wherein the restricting device is a control conduit (32, 232) having a cross-sectional area less than or equal to about 50% of a cross-sectional area of the exhaust conduit (14, 44, 114).

14. The system (10, 100) according to Claim 13, wherein the control conduit (32, 232) (8) cross-sectional area is less than or equal to about 40% of the cross-sectional area of the exhaust conduit (14, 44, 114).

15. The system (10, 100) according to Claim 14, wherein the control conduit (32, 232) cross-sectional area is less than or equal to about 30% of the cross-sectional area of the exhaust conduit (14, 44, 114).

16. The system (10, 100) according to Claim 15, wherein the control conduit (32, 232) cross-sectional area is less than or equal to about 20% of the cross-sectional area of the exhaust conduit (14, 44, 114).

17. The system (10, 100) according to Claim 13, wherein the control conduit (32, 232) and the exhaust conduit (14, 44, 114) are separate conduits.

18. The system (10, 100) according to Claim 17, wherein the control conduit (32, 232) further comprises an inlet (40) extending at or beyond a plane defined by the shutter portion (30).

19. The system (10, 100) of Claim 13, wherein the control conduit (32, 232) and the exhaust conduit (14, 44, 114) comprise a single conduit with a divider (28) disposed therein.

20. The system (10, 100) according to Claim 12, wherein the exhaust conduit (14, 44, 114) further comprises an exhaust throttle device (18, 118, 230) comprising a shutter portion (30).

21. The system (10, 100) according to Claim 20, wherein the control conduit (32, 232) is disposed within the exhaust gas conduit and is formed by a partition (132) disposed in the exhaust conduit (14, 44, 114), with the shutter portion (30) disposed on a side of the partition (132) opposite the control conduit (32, 232).

22. The system (10, 100) according to Claim 21, wherein the partition (132) at least partially extends through the exhaust emission control device (18, 118, 230).

23. The system (10, 100) according to Claim 20, wherein the shutter further comprises at least one blade pivotable about a pivot point (140, 240).

24. The system (10, 100) according to Claim 20, wherein the shutter portion (30) further comprises an actuator (34), a support member (36) and a blade, and wherein the actuator (34) is in operable communication with the blade.

25. An exhaust system (10, 100), comprising:
an exhaust conduit (14, 44, 114) in fluid communication an outlet (24, 42) of an engine (12) and with a exhaust emission control device (18, 118, 230);
a means for restricting flow in the exhaust conduit (14, 44, 114) under selected conditions; and
a means for controlling the means for restricting flow.
